# EUROPÄISCHE PATENTANMELDUNG

(11) **EP 1 435 559 A2**
(43) Veröffentlichungstag der Anmeldung: **07.07.2004**
(21) Anmeldenummer: 03028167.9
(22) Anmeldetag: 08.12.2003
(51) Int. Cl.: G06F 1/30

(54) **Verfahren zur Sicherung von Daten**

(30) Priorität: 09.12.2002 DE 10257444
(71) Anmelder: Fujitsu Siemens Computers GmbH, 80807 München (DE)
(72) Erfinder: Freudenschuss, Reinhold, 86199 Augsburg (DE); Himml, Juergen, 86836 Graben (DE)
(74) Vertreter: Epping Hermann & Fischer

(57) **Zusammenfassung**

Die Erfindung betrifft ein Verfahren zur Sicherung von Daten im Arbeitsspeicher eines Rechners bei Unterbrechung der Energiezufuhr, wobei erfindungsgemäß die Daten im Arbeitsspeicher bei Umschaltung des Rechners in einen Energiesparzustand automatisch in einen nichtflüchtigen Speicher abgelegt werden.

## Beschreibung

Die Erfindung betrifft ein Verfahren zur Sicherung von Daten im Arbeitsspeicher eines Rechners bei Unterbrechung der Energiezufuhr.

Nahezu alle am Markt befindlichen PCs bzw. Notebooks sind mit einem Energiemanagement ausgestattet, so daß der Computer bzw. das Notebook nach einer gewissen Zeitspanne, in welcher keine Betätigung durch Eingabegeräte wie Tastatur oder Maus erfolgt, automatisch in einen Energiesparzustand geschalten wird.

Energiesparzustände sind bekannt für Monitore, für Festplatten sowie auch für den gesamten Computer.

Ist der Rechner in den Energiesparzustand geschalten, ist in der Regel der Bildschirm dunkel, da entweder zuvor bereits ein Bildschirmschoner aktiviert wurde oder durch das Monitor-Energiesparmanagement eine Dunkelschaltung des Bildschirm erfolgte.

Tritt jedoch in diesem Energiesparzustand eine Unterbrechung der Energiezufuhr auf, gehen bisher alle, welche im Arbeitsspeicher in der Regel im RAM des Rechners abgelegt sind, verloren. Die Unterbrechung der Energiezufuhr kann z.B. durch einen Netzausfall hervorgerufen sein oder auch ganz einfach dadurch begründet sein, daß der Benutzer seine Arbeit für längere Zeit unterbrochen hat und wieder zum Rechner zurückkehrt, diesen ausschaltet, ohne vorher alle Programme wie vorgesehen zu beenden. Bei Notebooks tritt es häufiger auf, daß entweder der Akku in einer derartigen Phase unter seine Betriebsspannung sinkt oder der Nutzer durch Wechsel des Ortes das Notebook von der Netzverbindung trennt.

Durch den Verlust der RAM-Daten kann beim Wiederhochfahren des Rechners nicht wieder der Zustand vor dem Ausschalten erlangt werden und evtl. gehen wichtige Informationen oder aufwendige Änderungen, welche nur im RAM abgelegt waren, unwiederbringlich verloren.

Betriebssysteme mit dem Advanced Power Management (APM) wie Windows95 und NT weisen z.B. im BIOS-Setup folgende Energiesparfunktionen auf:
Suspend to RAM
Save to Disk
LCD Off

Bei Suspend to RAM werden alle aktuellen Daten im Hauptspeicher (DRAM) gepuffert. Die Daten bleiben solange erhalten, wie der Computer bzw. das Notebook mit Energie versorgt wird. Bei Unterbrechung der Stromzufuhr bzw. ohne Akku und Stromanschluß gehen die Daten verloren.

Der große Vorteil bei Suspend to RAM besteht darin, daß durch einen kurzen Tastendruck bzw. eine Mausbewegung in Sekundenschnelle alle Daten wieder vorhanden sind.

Save to Disk bedeutet, daß die aktuellen Daten auf einer Festplatte gespeichert werden. Die Festplatte braucht hierzu eine Save to Disk-Partition, so daß im Save to Disk-Bereich Daten abgelegt werden können. Diese Daten gehen zwar bei einer Unterbrechung der Energiezufuhr nicht verloren, jedoch stehen die Daten wesentlich langsamer bei Wiederbetätigung des Computers bzw. Notebooks zur Verfügung.

Die Energiesparfunktion LCD Off bedeutet, eine Energiesparfunktion bzgl. des LCDs oder Monitors, so daß der Rechner komplett läuft und die Daten im RAM verbleiben.

Der Erfindung liegt daher die Aufgabe zugrunde, ein Verfahren zur Sicherung von Daten im Arbeitsspeicher eines Rechners bei Unterbrechung der Energiezufuhr aufzuzeigen.

Die Aufgabe wird erfindungsgemäß dadurch gelöst, daß die Daten im Arbeitsspeicher bei Umschaltung des Rechners in einen Energiesparzustand automatisch in einen nichtflüchtigen Speicher geschrieben werden.

Durch die Ablage der Daten in einem nichtflüchtigen Speicher stehen die auch nach Unterbrechung einer Stromzufuhr zur Verfügung.

Gleichzeitig bleiben die Daten noch im Arbeitsspeicher abgelegt, so daß auch der Vorteil eines sekundenschnellen Wiederstarts aus dem Energiesparzustand bestehen bleibt.

Vorzugsweise ist der Energiesparzustand ein ACPI S3-Zustand, d.h. ein Energiesparzustand entsprechend der Advanced Power Management-Einstellung Suspend to RAM, bei dem alle Daten im Hauptspeicher bzw. Arbeitsspeicher des Rechners abgelegt sind.

Gemäß einer bevorzugten Ausführungsform wird bei der Umschaltung in den Energiesparzustand eine betriebssystemunabhängige Routine gestattet, welche die Daten aus dem Arbeitsspeicher in einen nichtflüchtigen Arbeitsspeicher schreibt. Somit ist diese Funktion betriebssystemunabhängig und kann im BIOS implementiert oder durch das BIOS aktiviert werden.

Eine Weiterentwicklung der Erfindung sieht vor, daß die Routine anschließend den Rechner durch Schreiben eines bestimmten Wertes in ein Hardware-Register in den Energiesparzustand schaltet.

Erfolgt eine Unterbrechung der Energiezufuhr im Energiesparzustand des Rechners, so gehen zwar die Daten aus dem Arbeitsspeicher verloren, jedoch bei einem Wiederstart des Rechners holt sich dieser die Daten aus dem nichtflüchtigen Speicher ebenso wie beim Energiesparzustand Save to Disk.

Die Erfindung vereinigt somit die Vorteile von Suspend to RAM und Save to Disk, da die Daten in Sekundenschnelle aus dem Arbeitsspeicher bei Betätigung einer Taste oder Maus zur Verfügung stehen und bei einer Unterbrechung der Stromversorgung dennoch nicht verloren gehen, da sie in einem nichtflüchtigen Speicher automatisch abgelegt werden.

## Patentansprüche

1. Verfahren zur Sicherung von Daten im Arbeitsspeicher eines Rechners bei Unterbrechung der Energiezufuhr,
**dadurch gekennzeichnet, daß**
die Daten im Arbeitsspeicher bei Umschaltung des Rechners in einen Energiesparzustand automatisch in einen nichtflüchtigen Speicher geschrieben werden.

2. Verfahren nach Anspruch 1,
**dadurch gekennzeichnet, daß**
der Energiesparzustand ein ACPI S3-Zustand oder ein APM Suspend-to-RAM Zustand ist, bei welchem die Daten im Arbeitsspeicher bzw. Hauptspeicher abgelegt sind.

3. Verfahren nach einem der Ansprüche 1 oder 2,
**dadurch gekennzeichnet, daß**
bei Umschaltung in den Energiesparzustand eine betriebssystemunabhängige Routine gestartet wird, welche die Daten aus dem Arbeitsspeicher in den nichtflüchtigen Speicher schreibt.

4. Verfahren nach Anspruch 3,
**dadurch gekennzeichnet, daß**
die Routine anschließend den Rechner durch Schreiben eines bestimmten Wertes in ein Hardware-Register in den Energiesparzustand schaltet.

5. Verfahren nach einem der Ansprüche 1 bis 4,
**dadurch gekennzeichnet, daß**
nach Unterbrechung der Energiezufuhr im Energiesparzustand die Daten bei einem Wiederstart automatisch aus dem nichtflüchtigen Speicher geladen werden.
